# EUROPEAN PATENT APPLICATION

(11) **EP 2 299 700 A2**
(43) Date of publication of application: **23.03.2011**
(21) Application number: 10158626.1
(22) Date of filing: 31.03.2010
(51) Int. Cl.: H04N 5/76, H04N 9/82, H04N 5/781

(54) **Information recording apparatus and information recording method**

(30) Priority: 18.09.2009 JP 2009218113
(71) Applicant: Kabushiki Kaisha Toshiba, Tokyo 105-8001 (JP)
(72) Inventor: Okada, Koji, Tokyo 105-8001 (JP); Yoshida, Osamu, Tokyo 105-8001 (JP)
(74) Representative: HOFFMANN EITLE

(57) **Abstract**

An information recording apparatus receives streams of programs on a plurality of channels (CH1-CHn) and performs loop recording of the streams for every channel (CH1-CHn) in a first recording area (28), and receives program information on each program whose stream is recorded in the first recording area (28) and records the program information in a second recording area (29). The information recording apparatus deletes each program information recorded in the second recording area (29) in order starting from program information on an earliest program whose stream is recorded in the first recording area (28), every time a set delete time has been reached.

## Description

The present invention relates to an improved information recording apparatus having what is called a multichannel simultaneous recording function to simultaneously record streams of programs which are delivered on a plurality of channels. This invention also relates to improved information recording method for implementing the above-mentioned multichannel simultaneous recording function.

As is well known, an information recording apparatus which has a digital device, such as a hard disk drive (HDD), integrated therein and receives television broadcasting and can record images and sounds related to the broadcast programs has recently become widespread. In this type of information recording apparatus, the recording capacity of the integrated digital recording device is dramatically increasing year after year.

Among information recording apparatuses having such a large-capacity digital recording device integrated therein, apparatuses including what is called a multichannel simultaneous recording function currently emerge. In the multichannel simultaneous recording function, based on a user's specification of a plurality of channels, streams of programs broadcast on the specified channels are simultaneously received and recorded.

With the multichannel simultaneous recording function, in a recording area of the digital recording device, recording areas each having the same and fixed recording capacity are reserved so as to correspond to a plurality of channels to be received. Streams of programs obtained by simultaneously receiving a plurality of channels are recorded in a parallel manner in the corresponding recording areas from their initial positions.

In this case, with the multichannel simultaneous recording function, each recording area in which streams of programs are to be recorded is controlled such that when the recording area becomes full, the operation of overwriting a new stream from the initial position of the recording area is repeated, that is, what is called loop recording is performed.

As a result, for each channel for which streams of programs are recorded, streams which are broadcast retroactively from the present time are always recorded such that the maximum amount of streams causes the recording area to become full. This enables a user to view programs retroactively for a given time period from the present time. Convenience for a user can therefore be improved.

However, the technology to implement such a multichannel simultaneous recording function is still under development, and has plenty of room for improvement of details. That is, when streams of a program are recorded, not only streams of images and sounds related to the content of the program but also program information on the program needs to be recorded.

The program information includes various information items, such as information for searching the program, the title of the program, performers, the outline explanation, the start time and the finish time. Therefore, both the streams related to the program content and the program information need to be recorded for each of a plurality of channels, and rationally managing both of them has become important.

Jpn. Pat. Appln. KOKAI Publication No. 2009-16959 discloses that a recording area to which stream data is repeatedly overwritten and recorded is generated in a recording medium, and management information is updated so as to correspond to recording of the stream data to the recording area to set a partial area which is a segment of the recording area, and prevent the number of the partial areas from exceeding a predetermined value.

The present invention has been made in view of the foregoing circumstances. An object of the invention is to provide an information recording apparatus and an information recording method in which, at the time of implementing a multichannel simultaneous recording function, management of deletion of recorded program information is improved to allow a user to easily find programs on each channel which are sequentially updated by loop recording.

According to the above-mentioned aspects of the present invention, each program information item recorded in a second recording area is deleted in order starting from program information on the earliest program whose stream is recorded in a first recording area, every time the set delete time has been reached. This makes it possible for a user to easily find programs on each channel which are sequentially updated by loop recording.

The invention can be more fully understood from the following detailed description when taken in conjunction with the accompanying drawings, in which:
FIG. 1 is a block diagram for explaining an example of a signal processing system which an information recording and reproducing device has, in accordance with an embodiment of this invention;
FIG. 2 is an explanatory diagram of an example of a stream recording area and a program information recording area formed in a hard disk in the information recording and reproducing device in the embodiment;
FIG. 3 is an explanatory diagram of an example of a corresponding table of a recording date and an address in a recording area which is created by the information recording and reproducing device in the embodiment;
FIG. 4 is a view for explaining that when loop recording on each channel is repeated, the start time of the earliest program which can be reproduced differs for every channel;
FIG. 5 is a flowchart for explaining an example of the main processing operation performed by the information recording and reproducing device in the embodiment; and
FIG. 6 is a view for explaining an example of the case where the start times of the earliest programs which are retroactively reproducible can be made uniform for every channel by the information recording and reproducing device in the embodiment.

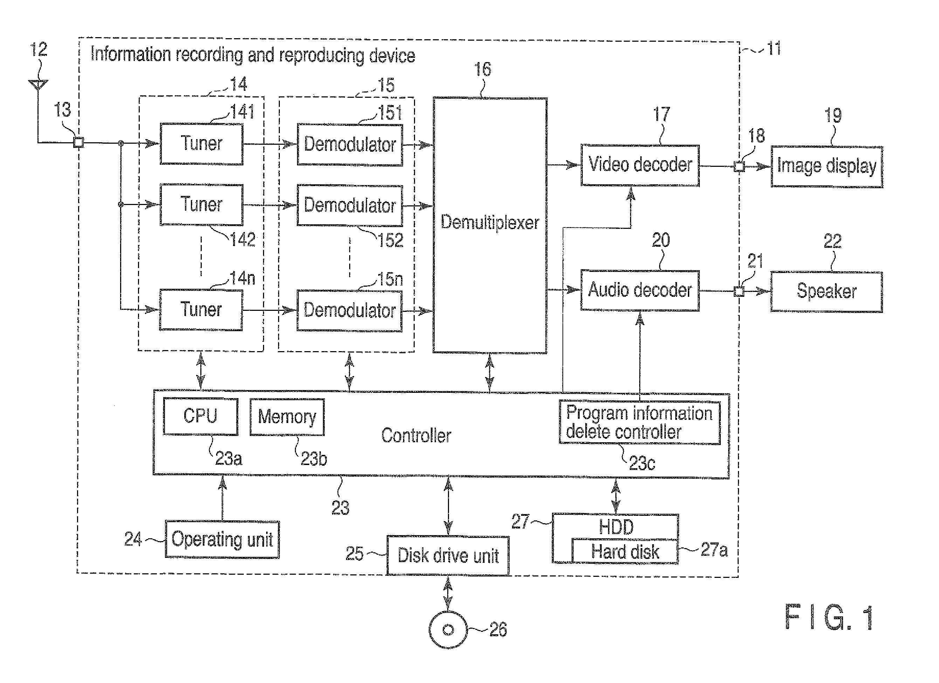

An embodiment of this invention will be described in detail below with reference to the drawings. FIG. 1 illustrates a signal processing system of an information recording and reproducing device 11 to be described in this embodiment. The information recording and reproducing device 11 has a digital television broadcast receiving function which enables images, streams of sounds and so on related to received broadcast programs, program information related to the programs, and the like to be recorded and reproduced.

In other words, digital television broadcast signals received at an antenna 12 are supplied through an input terminal 13 to each of a plurality of tuners 141, 142, ... , 14n constituting a tuner processing unit 14. The tuners 141 to 14n each select broadcast signals of a desired channel from the input digital television broadcast signals.

Then, broadcast signals selected in the tuners 141 to 14n are supplied to a plurality of demodulators 151, 152, ... , 15n constituting a demodulating unit 15, respectively. The demodulators 151 to 15n each demodulate continuous streams of images, sounds and so on related to the broadcast programs from the input broadcast signals, and demodulate program information related to each program.

Thereafter, the streams of programs demodulated in the demodulators 151 to 15n and program information, and so on are supplied to a demultiplexer 16. The demultiplexer 16 selects one from a plurality of input streams, and separates the selected streams into a video stream and an audio stream.

Then, the video stream output from the demultiplexer 16 is supplied to a video decoder 17. The video decoder 17 performs decoding of the input video stream, and then converts the resultant into analog video signals. The analog video signals output from the video decoder 17 are supplied through an output terminal 18 to an image display 19 for image display.

The audio stream output from the above-mentioned demultiplexer 16 is supplied to an audio decoder 20. The audio decoder 20 decodes the input audio stream, and then converts the resultant into analog audio signals. The analog audio signals output from the audio decoder 20 are supplied through an output terminal 21 to a speaker 22 for sound reproduction.

Note that the above-mentioned demultiplexer 16 can also combine video streams supplied from the demodulators 151 to 15n so as to perform what is called multi-image display in which the screen of the image display 19 is divided into a plurality of regions, and images different from one another are simultaneously displayed on the respective divided regions.

Here, in the information recording and reproducing device 11, all the operation including various kinds of receiving operation mentioned above is centrally controlled by a controller 23. The controller 23 has a central processing unit (CPU) 23a integrated therein, and receives operation information transmitted from an operation unit 24 including a remote controller (not illustrated) and controls each unit such that the content of the information is reflected.

In this case, the controller 23 utilizes a memory unit 25b. The memory unit 25b mainly has a read-only memory (ROM) to which control programs to be executed by the CPU 23a are stored, a random access memory (RAM) for providing a working area to the CPU 23a, and a nonvolatile memory to which various kinds of setting information and control information are stored.

Connected to the controller 23 is a disk drive unit 25. The disk drive unit 25 is designed such that an optical disk 26, such as a Digital Versatile Disk (DVD), is attachable to and removable from it, and has a function of recording and reproducing digital data on and from the attached optical disk 26.

On the basis of a user's operation of an operating unit 24, the above-mentioned controller 23 performs encryption on video and audio streams and the like related to a given program which are obtained from the demultiplexer 16 and converts them into a given recording format, and then supplies them to the disk drive unit 25. Thus, the controller 23 can control the disk drive unit 25 such that video and audio streams and the like are recorded on the optical disk 26.

Also, on the basis of a user's operation of the operating unit 24, the controller 23 causes the disk drive unit 25 to read video and audio streams and the like related to a given program from the optical disk 26 and performs decryption on them, and then supplies them to the demultiplexer 16. Thus, subsequently, the controller 23 can control the demultiplexer 16 such that the video and audio streams and the like are provided for image display and sound reproduction.

Further, connected to the controller 23 is a hard disk drive (HDD) 27. On the basis of a user's operation of the operating unit 24, the controller 23 performs encryption on video and audio streams and the like related to a given program which are obtained from the demultiplexer 16 and converts them into a given recording format, and then supplies them to the HDD 27. Thus, controller 23 can control the HDD 27 such that the video and audio streams and the like are recorded on a hard disk 27a.

Also, on the basis of a user's operation of the operating unit 24, the controller 23 causes the HDD 27 to read video and audio streams and the like related to a given program from the hard disk 27a and performs decryption on them, and then supplies them to the demultiplexer 16. Thus, subsequently, the controller 23 can control the demultiplexer 16 such that the video and audio streams and the like are provided for image display and sound reproduction.

In this case, the controller 23 acquires, from the demultiplexer 16, program information on each program obtained from the demodulators 151 to 15n, and records it on the hard disk 27a. On the basis of a user's operation of the operating unit 24, the controller 23 can cause program information on a desired program to be read from the hard disk 27a and cause the desired program to be displayed on the image display 19.

Further, the controller 23 acquires, from the demultiplexer 16, streams of programs obtained from the demodulators 151 to 15n corresponding to a plurality of channels specified by a user, and performs encryption on the stream of each program and coverts it into a given recording format, and then supplies the streams to the HDD 27, so that a function to simultaneously record streams on the hard disk 27a, or what is called a multichannel simultaneous recording function, can be implemented.

Also in this case, the controller 23 acquires, from the demultiplexer 16, program information on programs of each channel whose streams are recorded on the hard disk 27a, and supplies the program information to the HDD 27 and causes the program information to be recorded on the hard disk 27a.

Here, the controller 23 comprises a program information deletion controller 23c. The program information deletion controller 23c, the details of which are to be described later, deletes program information which is recorded on the hard disk 27a using a multichannel simultaneous recording function, that is, program information on programs whose streams are loop recorded on the hard disk 27a, at a given timing in order starting from program information on the earliest program.

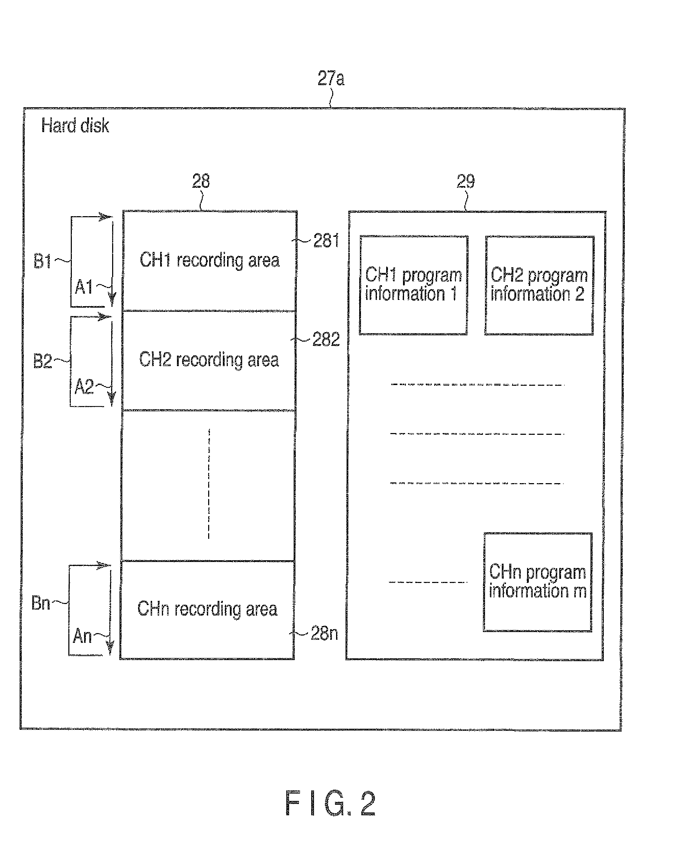

In other words, with the multichannel simultaneous recording function performed by the information recording and reproducing device 11, as illustrated in FIG. 2, a stream recording area 28 in which video and audio streams and the like of programs to be broadcast on each of a plurality of channels specified by a user are recorded and a program information recording area 29 in which program information on each program having streams recorded in the stream recording area 28 is provided in a recording area of the hard disk 27a.

Of these recording areas, the stream recording area 28 comprises recording areas 281, 282, ... , 28n each having a same and fixed recording capacity, respectively corresponding to a plurality of channels CH1, CH2, ... , CHn specified by a user. The streams of programs simultaneously received on channels CH1 to CHn are recorded in a parallel manner in recording areas 281 to 28n respectively corresponding to channels CH1 to CHn.

That is, streams of programs obtained from simultaneous reception on the plurality of channels CH1 to CHn are simultaneously recorded in a parallel manner in the corresponding recording areas 281 to 28n, respectively, from their initial positions (the position at the top end of each of the recording areas 281 to 28n in FIG. 2) as indicated by arrows A1, A2, ... , An in FIG. 2.

For each of the recording areas 281 to 28n corresponding to channels CH1 to CHn, when the recording area becomes full (when recording reaches the position of the bottom end of each of the recording areas 281 to 28n in FIG. 2), the operation of returning to the initial position of each of the recording areas 281 to 28n and overwrite new streams is repeated as indicated by arrows B1, B2, ... , Bn in FIG. 2, that is, what is called loop recording is performed.

Recorded in the program information recording area 29 is program information on a plurality of programs whose streams are recorded in the recording areas 281 to 28n. For example, CH1 program information 1 on a program 1 of channel CH1; CH1 program information 2 on a program 2 of channel CH1, ... ; CHn program information m on a program m of channel CHn; and other information are recorded.

As such, the recording areas 281 to 28n which record streams of programs are provided so as to correspond to channels CH1 to CHn, respectively, and loop recording is performed for each of the recording areas 281 to 28n. This enables streams to be automatically deleted by overwriting without any mutual influence among channels CH1 to CHn.

Separating the program information recording area 29 from the stream recording area 28 enables the information recording and reproducing device 11 to delete desired program information at an arbitrary timing. For example, in cases where streams of an individual program are moved to another recording medium, program information which becomes unnecessary after the movement can be individually deleted from the hard disk 27a.

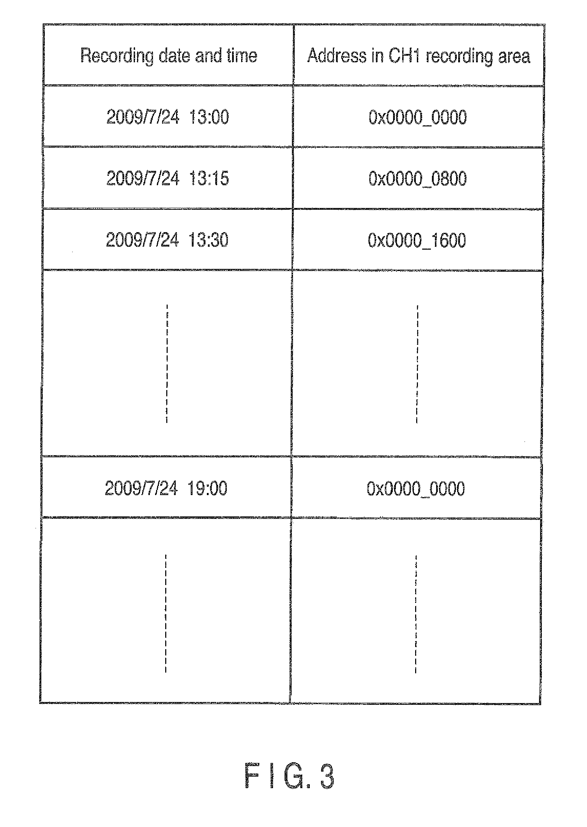

Further, as illustrated in FIG. 3, the controller 23 measures a recording date and time at regular intervals in a condition that streams are recorded in the recording areas 281 to 28n (in FIG. 3, only the recording area 281 corresponding to channel CH1 is illustrated) corresponding to channels CH1 to CHn in the stream recording area 28, respectively, and creates a table in which the measured recording date and time correspond to addresses in the recording area 281 at which streams are recorded at the recording date and time.

The table illustrated in FIG. 3 shows that, on July 24, 2009 at 13:00, streams are recorded in the recording area 281 corresponding to channel CH1 from its initial position (address 0x0000_0000), subsequently the address of the recording area 281 is described once every 15 minutes and the operation returns to the initial position (address 0x0000_0000) at 19:00 of the same day, and the operation is repeated.

Creating such a table allows the controller 23 to determine what streams have been automatically deleted by overwriting due to loop recording by the recording date and time. Program information on one program can therefore be deleted in a condition that it is determined that streams related to the program have been completely deleted by overwriting.

The plurality of recording areas 281 to 28n provided in the stream recording area 28 have the same and fixed recording capacity, and loop recording of streams simultaneously starts from their initial positions. However, variations in bit rate of a stream occur among channels CH1 to CHn or for every broadcast program in the same channel.

Accordingly, if only automatic deletion of streams by overwriting due to loop recording is repeated for the plurality of recording areas 281 to 28n, a reproducing time of a stream which is recorded earliest in currently recorded reproducible streams varies for each of the recording areas 281 to 28n.

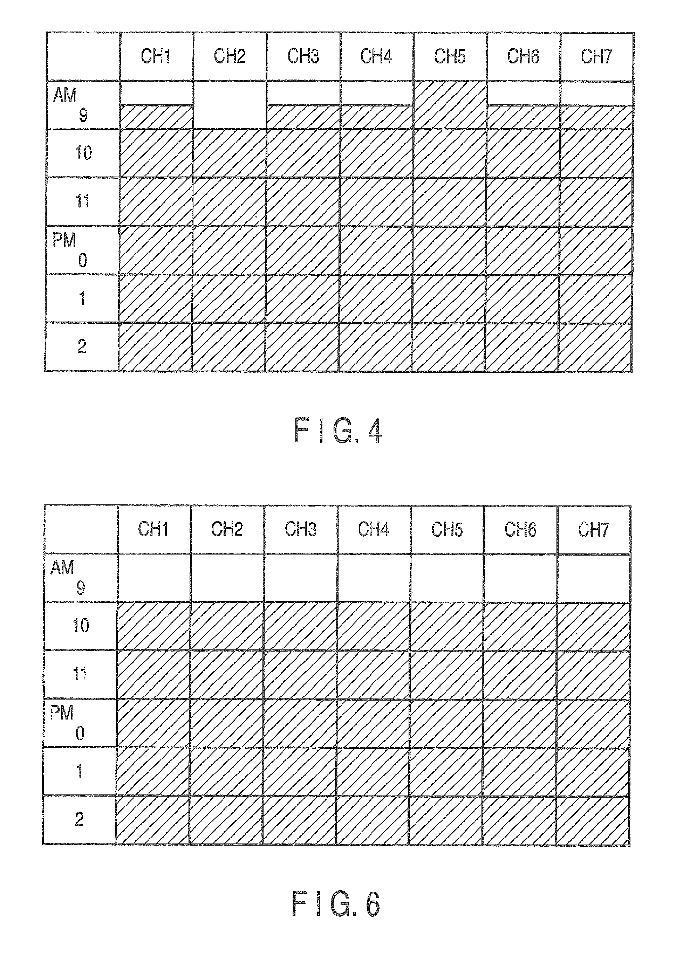

Specifically, FIG. 4 illustrates a status of recording reproducible streams at some time points in the recording areas 281 to 287 corresponding to channels CH1 to CH7 in the case of repeating loop recording of streams of broadcast programs of each of the plurality of (seven in the case illustrated in FIG. 4) channels CH1 to CH7. In FIG. 4, reproducible streams which are once recorded and are left without being overwritten by the next loop recording are indicated as the diagonally shaded areas.

As is apparent from FIG. 4, in channels CH1, CH3, CH4, CH6 and CH7, reproducible streams are left after 9:30 a.m., and therefore programs can be reproduced retroactively from the present time to 9:30 a.m. In contrast, in channel CH2, reproducible streams are left after 10:00 a.m., and programs can be reproduced retroactively from the present time to 10:00 a.m. In channel CH5, reproducible streams are left after 9:00 a.m., and therefore programs can be reproduced retroactively from the present time to 9:00 a.m.

In this way, the start time of the earliest program which can be reproduced retroactively varies for every channel CH1 to CHn. This makes it difficult for a user to find by what time programs on each of channels CH1 to CHn recorded by using a multichannel simultaneous recording function can be retroactively reproduced.

To address this, in this embodiment, the foregoing program information deletion controller 23c performs control such that program information recorded in the program information recording area 29 by using the multichannel simultaneous recording function is deleted at regular intervals in order starting from program information on the earliest program. However, if streams of a program corresponding to program information to be deleted are recorded both before and after the time of deleting the program information, the program information is deleted after all the streams of the program are automatically deleted by overwriting.

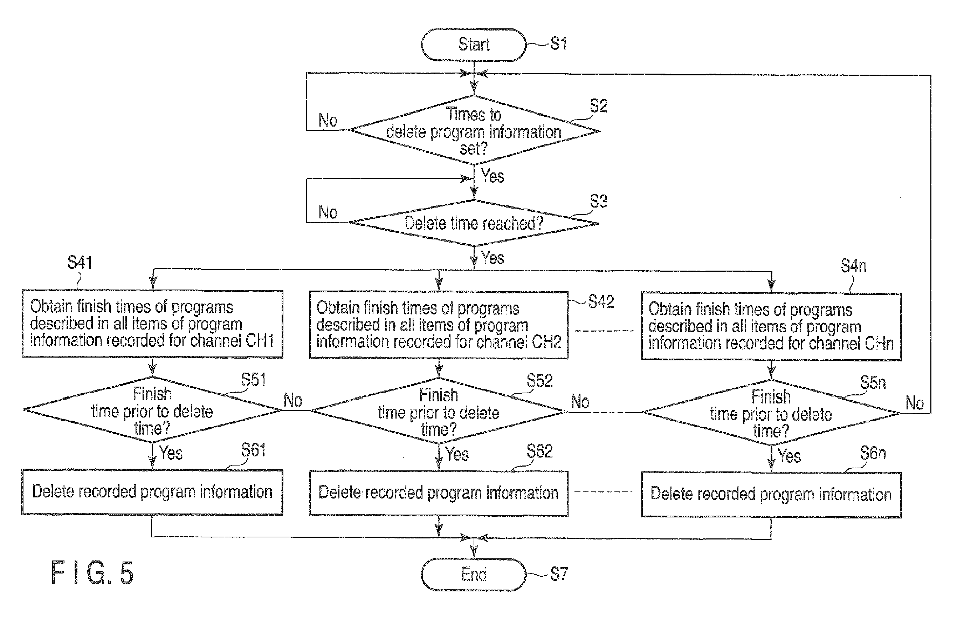

FIG. 5 illustrates a flowchart for providing a detailed explanation of the processing operation of the program information deletion controller 23c. That is, when the process starts (step S1), the program information deletion controller 23c determines in step S2 whether times at which program information is to be deleted are set. The times to delete program information are set by a user's operation of the operating unit 24 such that a specific time earlier than the present time is first set, and the subsequent times are set every time a certain time period has passed. For example, times are set at 9:00 a.m. and after every lapse of one hour (in this case, every hour).

If it is determined that the times to delete program information are set (YES), then the program information deletion controller 23c determines in step S3 whether a time to delete program information (in this case, every hour from 9:00 a.m.) has been reached. If it is determined that the time for deletion has been reached (YES), then the following processing is performed in a parallel manner for every channel CH1 to CHn.

That is, in step S41, the program information deletion controller 23c obtains finish times of programs described in all pieces of program information recorded in the program information recording area 29 for channel CH1. Then, in step S51, the program information deletion controller 23c determines whether the finish time of each program is prior to the time to delete program information which is determined to have been reached in step S3.

In step S61, the program information deletion controller 23c deletes, from the program information recording area 29, program information on a program having a finish time which is determined to be prior to the time to delete the program information (YES), and the process ends (step S7). Regarding program information on a program having a finish time which is determined to be not prior to the time to delete the program information (NO) in step S51, the program information deletion controller 23c leaves the program information intact in the program information recording area 29, and the process returns to step S2.

Also, in step S42, the program information deletion controller 23c obtains finish times of programs described in all pieces of program information recorded in the program information recording area 29 for channel CH2. Then, in step S52, the program information deletion controller 23c determines whether the finish time of each program is prior to the time to delete program information which is determined to have been reached in step S3.

In step S62, the program information deletion controller 23c deletes, from the program information recording area 29, program information on a program having a finish time which is determined to be prior to the time to delete the program information (YES), and the process ends (step S7). Regarding program information on a program having a finish time which is determined to be not prior to the time to delete the program information (NO) in step S52, the program information deletion controller 23c leaves the program information intact in the program information recording area 29, and the process returns to step S2.

Likewise, in step S4n, the program information deletion controller 23c obtains the finish times of programs described in all pieces of program information recorded in the program information recording area 29 for channel CHn. Then, in step S5n, the program information deletion controller 23c determines whether the finish time of each program is prior to the time to delete program information which is determined to have been reached in step S3.

In step S6n, the program information deletion controller 23c deletes, from the program information recording area 29, program information on a program having a finish time which is determined to be prior to the time to delete the program information (YES), and the process ends (step S7). Regarding program information on a program having a finish time which is determined to be not prior to the time to delete the program information (NO) in step S5n, the program information deletion controller 23c leaves the program information intact in the program information recording area 29, and the process returns to step S2.

According to the processing operation of the program information deletion controller 23c, the finish times of programs described in all pieces of program information recorded in the program information recording area 29 are obtained for each of channels CH1 to CHn, and program information on a program having a finish time prior to the preset delete time of program information is deleted from the program information recording area 29.

In short, as a result of deleting program information on a program having a finish time which is prior to the predetermined delete time, even if streams of the program to be reproduced prior to the delete time are left without being automatically deleted by overwriting, the streams cannot be reproduced because their program information has been deleted.

The start times of the earliest programs which are retroactively reproducible can therefore be made uniform on the basis of time to delete program information. As a result, a user is enabled to easily find by what time programs on each of channels CH1 to CHn recorded by using a multichannel simultaneous recording function can be retroactively reproduced.

Specifically, FIG. 6 illustrates the recording status of reproducible streams for the plurality (seven in the illustrated case) of channels CH1 to CH7 recorded by using a multichannel simultaneous recording function, as the diagonally shaded areas in cases where program information on programs finishing by 10:00 a.m. is deleted. As is apparent from FIG. 6, for each of channels CH1 to CH7, the times of the earliest programs which are retroactively reproducible are adjusted to every hour (10:00 a.m. in this case).

For program information corresponding to a program which starts before the delete time (10:00 a.m.) and finishes after the delete time (10:00 a.m.), such as a two-hour program which starts at 9:00 a.m. and finishes at 11:00 a.m., since the described finish time is 11:00 a.m., the program information is not deleted at the time point of 10:00 a.m. but is deleted when the delete time of 11:00 a.m. has been reached.

Here, while the case of receiving digital television broadcasting is exemplified in the foregoing embodiment, this invention is not limited to this. Of course, this invention may be applied to a system of delivering streams of programs and program information on a plurality of channels over networks, such as cable television and the Internet.

It should be noted that this invention is not limited to the foregoing embodiment as it is, and may be embodied by modifying elements in various ways in the practical stage without departing from the scope of this invention. Various inventions may be made by appropriately combining a plurality of elements disclosed in the foregoing embodiment. For example, several elements may be deleted from all the elements disclosed in the embodiment. Further, elements according to different embodiments may be appropriately combined.

## Claims

1. An information recording apparatus comprising:
a first recording unit (27) that simultaneously receives streams of programs on a plurality of channels (CH1-CHn) and performs loop recording of the streams for every channel in a first recording area (28);
a second recording unit (27) that receives program information on each program whose stream is recorded in the first recording area (28), and records the program information in a second recording area (29) ; and
a deletion unit (23c) that deletes each program information recorded in the second recording area (29) in order starting from program information on an earliest program whose stream is recorded in the first recording area (28), every time a set delete time has been reached.

2. The information recording apparatus according to claim 1, **characterized in that**
the deletion unit (23c) is arranged for deleting each program information recorded in the second recording area (29) in order starting from the program information on the earliest program whose stream is recorded in the first recording area (28), every time a preset certain time period has elapse.

3. The information recording apparatus according to claim 1 or 2, **characterized in that**
the deletion unit (23c) is arranged for setting a specific time earlier than a present time, and deleting each program information recorded in the second recording area (29) in order starting from the program information on the earliest program whose stream is recorded in the first recording area (28), every time an elapse of a certain time period has passed since the set time.

4. The information recording apparatus according to one of claims 1 to 3, **characterized in that**
the deletion unit (23c) is arranged for setting a specific time earlier than a present time, and determining program information to be deleted from the second recording area (29) every time an elapse of a certain time period has passed since the set time, on a basis of a time upon the elapse and a program finish time described in each program information recorded in the second recording area (29).

5. The information recording apparatus according to one of claims 1 to 4, **characterized in that**
the deletion unit (23c) is arranged for setting a specific time earlier than a present time, and deleting, every time an elapse of a certain time period has passed since the set time, program information in which a described program finish time is earlier than a time upon the elapse, among each program information recorded in the second recording area (29).

6. The information recording apparatus according to one of claims 1 to 5, **characterized in that**
the first recording area (28) comprises a plurality of recording areas (281-28n) a number of which corresponds to a number of the channels to be received, and
the first recording unit (27) performs simultaneous loop recording of the streams of the programs received on said plurality of channels (CH1-CHn) in the recording areas (281-28n) corresponding to respective ones of the channels.

7. The information recording apparatus according to claim 6, **characterized in that**
each of said plurality of recording areas (281-28n) which the first recording area (28) comprises has a same and fixed recording capacity.

8. The information recording apparatus according to one of claims 1 to 7, **characterized in that**
both the first recording area (28) and the second recording area (29) are formed on a hard disk (27a).

9. An information recording method comprising:
simultaneously receiving streams of programs on a plurality of channels (CH1-CHn) and performing loop recording (27) of the streams for every channel (CH1-CHn) in a first recording area;
receiving program information an each program whose stream is recorded in the first recording area (28), and recording (27) the program information in a second recording area (29); and
deleting (23c) each program information recorded in the second recording area (29) in order starting from program information on an earliest program whose stream is recorded in the first recording area (28), every time a set delete time has been reached.
